# EUROPEAN PATENT APPLICATION

(11) **EP 4 686 740 A1**
(43) Date of publication of application: **04.02.2026**
(21) Application number: 25189274.1
(22) Date of filing: 14.07.2025
(51) Int. Cl.: C08L 77/06, C08K 7/06, C08L 79/02, C08G 69/26

(54) **RESIN COMPOSITION AND MOLDED BODY**

(30) Priority: 29.07.2024 JP 2024122635
(71) Applicant: Sumitomo Chemical Co., Ltd., Tokyo 103-6020 (JP)
(72) Inventor: Nojima, Shiki, Chiba, 299-0195 (JP)
(74) Representative: Vossius & Partner Patentanwälte Rechtsanwälte mbB

(57) **Abstract**

There are provided a resin composition that makes it possible to produce a molded body having enhanced durability and a molded body containing this resin composition. A resin composition containing a semi-aromatic polyamide having a structural unit represented by formula (1), a carbon fiber, and a water-soluble carbodiimide. In formula (1), Ar¹ represents a phenylene group or a naphthylene group, and a plurality of Ar¹s of the semi-aromatic polyamide may be the same as or different from one another. p is an integer of 4 to 12.

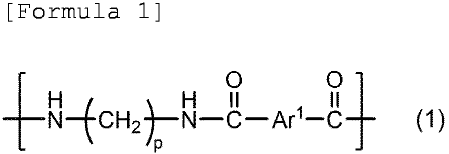

## Description

### Technical Field

The present disclosure relates to a resin composition and a molded body.

### Background Art

Polyamide has excellent wear resistance and strength and is widely used as a molding material for various members such as mechanical components.

Patent Literature 1 discloses a resin composition for extruding molding containing a semi-aromatic polyamide and a carbodiimide compound in a particular ratio.

### Citation List

### Patent Literature

Patent Literature 1: Japanese Patent Laid-Open No. 2023-10587

### Summary of Invention

### Problems to be Solved by Invention

However, there is a need for further improvements in the durability of a molded body containing a conventional resin composition containing a semi-aromatic polyamide.

The present disclosure has been made in view of the above circumstances, and an object of the present disclosure is to provide a resin composition capable of producing a molded body having enhanced durability and a molded body containing this resin composition.

### Means to Solve the Problems

The present disclosure includes the following modes in order to solve the above problem.
[1] A resin composition comprising: a semi-aromatic polyamide having a structural unit represented by the following formula (1); a carbon fiber; and a water-soluble carbodiimide. 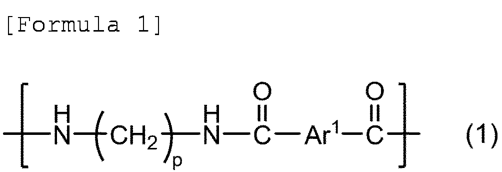 wherein Ar¹ represents a phenylene group or a naphthylene group, and a plurality of Ar¹s of the semi-aromatic polyamide are the same as or different from one another; and p is an integer of 4 to 12.
[2] The resin composition according to [1], wherein the semi-aromatic polyamide is a semi-aromatic polyamide having a structural unit represented by formula (1) wherein Ar¹ represents a 1,4-phenylene group and p is 9 or 10.
[3] The resin composition according to [1] or [2], wherein a content of the water-soluble carbodiimide is 0.1% by mass or more and 15% by mass or less based on a total mass of the resin composition.
[4] The resin composition according to any one of [1] to [3], wherein a content of the carbon fiber is 5% by mass or more and 60% by mass or less based on a total mass of the resin composition.
[5] The resin composition according to any one of [1] to [4], wherein a content of the semi-aromatic polyamide is 40% by mass or more and 95% by mass or less based on a total mass of the resin composition.
[6] The resin composition according to any one of [1] to [5], wherein a content of the carbon fiber is 5 parts by mass or more and 160 parts by mass or less, preferably 20 parts by mass or more and 80 parts by mass or less, and more preferably 35 parts by mass or more and 50 parts by mass or less; and a content of the water-soluble carbodiimide is 0.1 parts by mass or more and 35 parts by mass or less, preferably 0.2 parts by mass or more and 15 parts by mass or less, and more preferably 0.3 parts by mass or more and 3 parts by mass or less, based on 100 parts by mass of a content of the semi-aromatic polyamide.
[7] The resin composition according to any one of [1] to [6], wherein a mass ratio of the carbon fiber to the water-soluble carbodiimide is 1/7 to 160/1, preferably 8/1 to 120/1, and more preferably 10/1 to 100/1.
[8] The resin composition according to any one of [1] to [7], wherein the semi-aromatic polyamide is a semi-aromatic polyamide having a structural unit represented by formula (1) wherein Ar¹ represents a 1,4-phenylene group and p is 9 or 10, the water-soluble carbodiimide is a carbodiimide compound that is soluble in water at 25°C at a concentration of 10% by mass or more, and is a polycarbodiimide having a carbodiimide group (-N=C=N-) and a hydrophilic segment in a molecule, wherein the hydrophilic segment is a structure comprising at least one selected from the group consisting of an oxyalkylene group, an acetal structure, an imino group, a hydroxy group, an amino group, an epoxy group, and a carboxy group, and the polycarbodiimide has a carbodiimide group (-N=C=N-) equivalent of 300 g/mol or more and 600 g/mol or less.
[9] The resin composition according to any one of [1] to [8], being a resin composition for molding a gear.
[10] A molded body comprising the resin composition according to any one of [1] to [8].
[11] The molded body according to [10], being a gear.

### Effects of Invention

According to the present disclosure, it is possible to provide a resin composition that makes it possible to produce a molded body having enhanced durability and a molded body containing this resin composition.

### Brief Description of Drawings

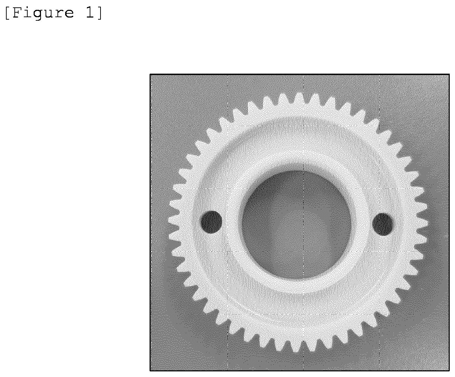

[Figure 1] Figure 1 is a top view obtained by taking a photograph of an example of gears produced in Examples.

### Embodiments for Carrying out Invention

### (Resin composition)

One embodiment of a resin composition contains: a semi-aromatic polyamide having a structural unit represented by formula (1); a carbon fiber; and a water-soluble carbodiimide.

### <Semi-aromatic polyamide>

The semi-aromatic polyamide in the present embodiment has a structural unit represented by the following formula (1). 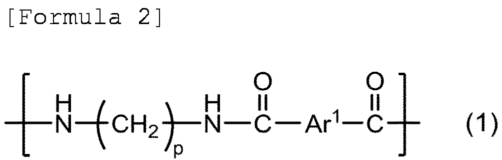 wherein Ar¹ represents a phenylene group or a naphthylene group, and a plurality of Ar¹s of the semi-aromatic polyamide are the same as or different from one another; and p is an integer of 4 to 12.

The semi-aromatic polyamide is a polycondensed product of an aliphatic diamine and an aromatic dicarboxylic acid.

The aliphatic diamine may be an aliphatic diamine having 4 to 12 carbon atoms. Examples of the aliphatic diamine having 4 to 12 carbon atoms include 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, and 1,12-dodecanediamine. The aliphatic diamines may be used singly or in combinations of two or more.

Examples of the aromatic dicarboxylic acid include terephthalic acid, phthalic acid, isophthalic acid, and naphthalene dicarboxylic acid. The aromatic dicarboxylic acids may be used singly or in combinations of two or more.

From the viewpoint that a molded body to be obtained has excellent durability and heat resistance, Ar¹ in the above formula (1) represents a phenylene group or a naphthylene group, and a plurality of Ar¹s of the semi-aromatic polyamide may be the same as or different from one another, and from the viewpoint that a molded body to be obtained has more excellent low water absorbency, p may be 9 or 10.

From the viewpoint that a molded body to be obtained has more excellent durability and heat resistance, Ar¹ in the above formula (1) represents a phenylene group or a naphthylene group, and a plurality of Ar¹s of the semi-aromatic polyamide may be the same as or different from one another, and from the viewpoint that the effect of improving the durability due to the addition of the water-soluble carbodiimide is even more excellent and a molded body to be obtained has even more excellent low water absorbency, p may be 10.

Examples of the phenylene group as Ar¹ include a 1,4-phenylene group and a 1,3-phenylene group. Examples of the naphthylene group as Ar¹ include a 2,6-naphthylene group and a 2,7-naphthylene group.

Preferably, in the above formula (1), Ar¹ represents a 1,4-phenylene group, and p may be an integer of 4 to 12. More preferably, in the above formula (1), Ar¹ represents a 1,4-phenylene group, and p may be 9 or 10. Particularly preferably, in the above formula (1), Ar¹ represents a 1,4-phenylene group, and p may be 10.

In the semi-aromatic polyamide, the content of the structural unit represented by the above formula (1) is preferably 40% or more, more preferably 80% or more, and even more preferably 90% or more, based on the total number of units (100%) of all the structural units in the semi-aromatic polyamide.

In the semi-aromatic polyamide, the content of the structural unit represented by the above formula (1) wherein Ar¹ represents a phenylene group or a naphthylene group, a plurality of Ar¹ of the semi-aromatic polyamide may be the same as or different from one another, and p is 9 or 10 is preferably 40% or more, more preferably 80% or more, and even more preferably 90% or more, based on the total number of units (100%) of all the structural units in the semi-aromatic polyamide.

In the semi-aromatic polyamide, the content of the structural unit represented by the above formula (1) wherein Ar¹ represents a 1,4-phenylene group, and p is 9 or 10 is preferably 40% or more, more preferably 80% or more, and even more preferably 90% or more, based on the total number of units (100%) of all the structural units in the semi-aromatic polyamide.

In the semi-aromatic polyamide, the content of the structural unit represented by the above formula (1) wherein Ar¹ represents a 1,4-phenylene group, and p is 10 is preferably 40% or more, more preferably 80% or more, and even more preferably 90% or more, based on the total number of units (100%) of all the structural units in the semi-aromatic polyamide.

The melt mass flow rate (MFR) of the semi-aromatic polyamide, as measured in accordance with JIS K 7210 at a test temperature of 330°C with a load of 2160 g, is preferably 150 g/10 min or less, more preferably 125 g/10 min or less, and even more preferably 100 g/10 min or less.

As another aspect, the MFR of the semi-aromatic polyamide, as measured in accordance with JIS K 7210 at a test temperature of 330°C with a load of 2160 g, is preferably 80 g/10 min or less, more preferably 50 g/10 min or less, and even more preferably 30 g/10 min or less.

The resin composition containing a semi-aromatic polyamide having an MFR of equal to or less than the above upper limit value makes it possible to produce a molded body having even more excellent durability.

The MFR of the semi-aromatic polyamide, as measured in accordance with JIS K 7210 at a test temperature of 330°C with a load of 2160 g, may be 5 g/10 min or more, may be 10 g/10 min or more, or may be 15 g/10 min or more.

The above-exemplified upper limit values and lower limit values of the MFR of the semi-aromatic polyamide can be freely combined.

The MFR of the semi-aromatic polyamide, as measured in accordance with JIS K 7210 at a test temperature of 330°C with a load of 2160 g, may be 5 g/10 min or more and 150 g/10 min or less, may be 10 g/10 min or more and 125 g/10 min or less, or may be 15 g/10 min or more and 100 g/10 min or less, as an example.

As another aspect, the MFR of the semi-aromatic polyamide, as measured in accordance with JIS K 7210 at a test temperature of 330°C with a load of 2160 g, may be 5 g/10 min or more and 80 g/10 min or less, may be 10 g/10 min or more and 50 g/10 min or less, or may be 15 g/10 min or more and 30 g/10 min or less, as an example.

The MFR of the semi-aromatic polyamide can be controlled, for example, by appropriately adjusting the conditions relating to the reaction efficiency of the polycondensation reaction, such as raw material monomers, a catalyst, and reaction time for example.

The resin composition of the present embodiment may contain one of the semi-aromatic polyamides or may contain two or more of the semi-aromatic polyamides.

In the resin composition of the present embodiment, the content of the semi-aromatic polyamide is, for example, 40% by mass or more, and may be 40% by mass or more and 95% by mass or less, or may be 60% by mass or more and 85% by mass or less, based on the total mass of the resin composition.

### <Carbon fiber>

The carbon fiber in the present embodiment is a general carbon fiber obtained by firing a precursor (fiber for carbon fiber raw material). For example, the precursor is first subjected to flameproofing treatment in an oxidizing atmosphere, and the resulting flameproofed fiber is then fired at about 800 to about 2000°C in an inert gas atmosphere. If necessary, this is further fired in a higher-temperature inert gas. Carbon fibers with a sizing agent applied on the surface thereof are generally known.

Examples of the type of the carbon fiber include polyacrylonitrile-based (hereinafter, sometimes also referred to as "PAN-based"), petroleum/coal pitch-based (hereinafter, sometimes also referred to as "pitch-based"), rayon-based, and lignin-based carbon fibers.

Examples of the PAN-based carbon fibers include "TORAYCA **(R),"** manufactured by Toray Industries, Inc., "Pyrofil **(R),"** manufactured by Mitsubishi Chemical Corporation, and "Tenax (R)," manufactured by Toho Tenax Co., Ltd.

Examples of the pitch-based carbon fibers include "DIALEAD (R)," manufactured by Mitsubishi Chemical Functional Products, Inc., "DONACARBO (R)," manufactured by Osaka Gas Chemicals Co., Ltd., and "KRECA (R)," manufactured by Kureha Chemical Industry Co., Ltd.

In addition, the carbon fiber is preferably a carbon fiber bundle obtained by bundling a plurality of single fibers, or a chopped carbon fiber.

The number average fiber diameter of the carbon fiber may be 1 µm or more and 10 µm or less, or may be 5 µm or more and 8 µm or less.

When the number average fiber diameter of the carbon fiber is 1 µm or more, the carbon fiber is easily dispersed in the semi-aromatic polyamide. In addition, the carbon fiber is easy to handle during production of the resin composition. On the other hand, when the number average fiber diameter of the carbon fiber is 10 µm or less, the semi-aromatic polyamide is efficiently reinforced by the carbon fiber. Therefore, excellent mechanical strength can be imparted to a molded body obtained by molding the resin composition.

As the number average fiber diameter of the carbon fiber, the number average value of the values obtained by observing the carbon fiber with a scanning electron microscope (1000 magnifications) and measuring fiber diameters of 50 carbon fibers is employed.

Note that the fiber diameter of the carbon fiber in the resin composition or the molded body hardly changes due to melt kneading and is usually the same as the fiber diameter of the carbon fiber before the melt kneading.

The number average fiber length of the carbon fiber in the resin composition may be 10 µm or more and 400 µm or less, or may be 100 µm or more and 350 µm or less.

When the number average fiber length of the carbon fiber is equal to or more than the above lower limit value, the durability of the molded body obtained by molding the resin composition is more likely to be enhanced. On the other hand, when the number average fiber length of the carbon fiber is equal to or less than the above upper limit value, the semi-aromatic polyamide is efficiently reinforced by the carbon fiber.

### [Method for measuring number average fiber length of carbon fiber in resin composition]

The resin composition is heated at 450°C for 3 hours to remove the resin component and obtain an ashed residue containing the carbon fiber. A sample solution is obtained by mixing 1 g of the ashed residue with 150 mL of acetone. Next, about 5 mL of the sample solution is put on a glass slide and dried naturally. The glass slide with the ashed residue put thereon is set in a projector (microscope) and displayed enlarging the image to 100 magnifications, and the fiber lengths of at least 400 carbon fibers are measured to determine the number average value of the measured fiber lengths of the carbon fibers.

The resin composition of the present embodiment may contain one type of the carbon fiber or may contain two or more types of the carbon fiber.

The content of the carbon fiber in the resin composition of the present embodiment is, for example, 5% by mass or more, and may be 5% by mass or more and 60% by mass or less, or may be 15% by mass or more and 40% by mass or less, based on the total mass of the resin composition.

### <Water-soluble carbodiimide>

The water-soluble carbodiimide in the present embodiment is a carbodiimide compound that has a carbodiimide group (-N=C=N-) and a hydrophilic segment in the molecule and that is soluble in water.

The "compound that is soluble in water" as referred to here refers to a compound that is soluble in water at 25°C at a concentration of 10% by mass or more. As the water-soluble carbodiimide, a carbodiimide compound that is soluble in water at 25°C at a concentration of preferably 20% by mass or more, more preferably at a concentration of 35% by mass or more, is used. A non-water-soluble carbodiimide refers to a carbodiimide other than the water-soluble carbodiimide.

Examples of the hydrophilic segment include structures containing at least one selected from the group consisting of an oxyalkylene group, an acetal structure, an imino group, a hydroxy group, an amino group, an epoxy group, and a carboxy group.

The water-soluble carbodiimide may be a monocarbodiimide having one carbodiimide group in the molecule or may be a polycarbodiimide having two or more carbodiimide groups in the molecule.

The water-soluble carbodiimide may be an aromatic carbodiimide, may be an alicyclic carbodiimide, or may be a chain aliphatic carbodiimide.

In addition, the water-soluble carbodiimide may be an aromatic monocarbodiimide, may be an alicyclic monocarbodiimide, may be a chain aliphatic monocarbodiimide, may be an aromatic polycarbodiimide, may be an alicyclic polycarbodiimide, or may be a chain aliphatic polycarbodiimide.

From the viewpoint of having high reactivity with the semi-aromatic polyamide, the water-soluble carbodiimide is preferably a polycarbodiimide.

The carbodiimide group (-N=C=N-) equivalent in the water-soluble carbodiimide is preferably 300 g/mol or more, and may be 300 g/mol or more and 600 g/mol or less, or may be 350 g/mol or more and 500 g/mol or less.

As the water-soluble carbodiimide in the present embodiment, a known water-soluble carbodiimide can be used, or a commercially available water-soluble carbodiimide can be used. Examples of the commercially available product that can be used include CARBODILITE (R) V-02, V-02-L2, SV-02, V-04, and V-10 (all manufactured by Nisshinbo Chemical Inc.), which are water-soluble types of CARBODILITE (R).

The resin composition of the present embodiment may contain one water-soluble carbodiimide or may contain two or more water-soluble carbodiimides.

The content of the water-soluble carbodiimide in the resin composition of the present embodiment is, for example, 0.1% by mass or more, and may be 0.1% by mass or more and 15% by mass or less, may be 0.1% by mass or more and 12% by mass or less, or may be 0.2% by mass or more and 6% by mass or less, based on the total mass of the resin composition.

### <Other components>

The resin composition of the present embodiment may contain other components that do not correspond to any of the above-described semi-aromatic polyamide, carbon fiber, and water-soluble carbodiimide in a range where the effects of the present disclosure are not impaired.

Examples of the other components include a filler other than the carbon fiber, an additive, and a resin that does not correspond to the semi-aromatic polyamide (hereinafter, sometimes referred to as "additional resin").

The other components may be used singly or in combinations of two or more.

The filler other than the carbon fiber may be a fibrous filler or a granular filler. In addition, the filler other than the carbon fiber may be an inorganic filler or may be an organic filler.

Examples of the additive include a stabilizer, a release agent, an antioxidant, a heat stabilizer, an ultraviolet absorber, an antistatic agent, a surfactant, a flame retardant, and a colorant.

Examples of the additional resin include: thermoplastic resins such as polyester, polyphenylene sulfide, polyether ketone, polycarbonate, polyphenylene ether, polyetherimide, and a fluororesin; and thermosetting resins such as a phenol resin, an epoxy resin, a polyimide resin, and a cyanate resin.

In the resin composition of the present embodiment, the semi-aromatic polyamide having a structural unit represented by the above formula (1), the carbon fiber, the water-soluble carbodiimide, and other components are contained in such a way that the total of contents (% by mass) of these is 100% by mass.

As described above, in the resin composition of the present embodiment, the water-soluble carbodiimide is used in combination in addition to the semi-aromatic polyamide having a structural unit represented by the above formula (1) and the carbon fiber. The water-soluble carbodiimide has a functional group that can react with the semi-aromatic polyamide. When this water-soluble carbodiimide coexists, thereby the adhesion between the semi-aromatic polyamide and the carbon fiber at the interface of the two is strengthened. Therefore, it is considered that according to the resin composition of the present embodiment, the durability when a molded body is made is enhanced.

The resin composition of the present embodiment enhance the durability of the molded body and therefore is suitable as a molding material for mechanical components such as gears and is particularly suitable as a resin composition for molding a gear.

The durability of the molded body can be evaluated using, as an example, the total number of revolutions until the gear is destructed in the [Durability test] described below as an index.

### [Durability test]

In a power-absorbing gear running tester shown in JIS B 1759, a metal master gear as a drive gear and a gear to be tested are engaged and installed.

The tester is operated under the conditions of a load torque to the gear of 8 N·m, a revolution speed of 1000 rpm, a non-lubricating condition, a temperature of 23°C, and a relative humidity of 50%RH to measure the total number of revolutions until the gear is destructed.

Note that the "destruction" of the gear in the durability test as referred to here is defined as a state in which the power cannot be transferred from the metal master gear to the gear due to breakage of the teeth of the gear or other reasons.

### [Method for producing resin composition]

The resin composition of the embodiment described above can be produced by mixing the semi-aromatic polyamide having a structural unit represented by the above formula (1), the carbon fiber, the water-soluble carbodiimide, and, if necessary, other components. In that case, the semi-aromatic polyamide, the carbon fiber, and the water-soluble carbodiimide, and, if necessary, other components are blended in such a way that the total of contents (% by mass) of those in the intended resin composition is 100% by mass.

One embodiment of such a method for producing the resin composition is a production method including a step (S) of mixing the semi-aromatic polyamide having a structural unit represented by the above formula (1), the carbon fiber, and the water-soluble carbodiimide.

Another embodiment of such a method for producing the resin composition is a production method including: a step (S1) of mixing the carbon fiber and the water-soluble carbodiimide in advance to prepare a mixture (M) of the carbon fiber and the water-soluble carbodiimide; and a step (S2) of mixing the semi-aromatic polyamide having a structural unit represented by the above formula (1) and the mixture (M).

One embodiment of the step (S1) mixes: an aqueous solution of the water-soluble carbodiimide; and the carbon fiber, and then heats the resulting mixture to remove water and prepare the mixture (M) of the carbon fiber and the water-soluble carbodiimide. The water-soluble carbodiimide concentration in the aqueous solution of the water-soluble carbodiimide is, for example, 30 to 50% by mass. The mixture (M) is solid such as in the form of a powder.

One embodiment of the step (S2) carries out melt kneading by charging the semi-aromatic polyamide and the mixture (M) prepared in the step (S1) into a twin-screw extruder, to thereby prepare the resin composition having a desired shape such as a pellet.

According to the production method including the step (S1) and step (S2) described above, the resin composition that makes it possible to produce a molded body having more enhanced durability can be easily produced. This is considered as follows: When the aqueous solution of the water-soluble carbodiimide and the carbon fiber are mixed in advance in the step (S1), the carbodiimide can be fixed strongly to the carbon fiber surface. Thereby, the adhesion at the interface between the carbon fiber with the carbodiimide strongly fixed thereto and the semi-aromatic polyamide is further strengthened, and therefore the durability when a molded body is made is enhanced more.

As another aspect, the present disclosure further includes the following modes.
[12] A resin composition comprising: a semi-aromatic polyamide having a structural unit represented by the following formula (1); a carbon fiber; and a water-soluble carbodiimide,
   wherein a content of the semi-aromatic polyamide is 40% by mass or more and 95% by mass or less,
   a content of the carbon fiber is 5% by mass or more and 60% by mass or less, and
   a content of the water-soluble carbodiimide is 0.1% by mass or more and 15% by mass or less,
   based on a total mass of the resin composition. 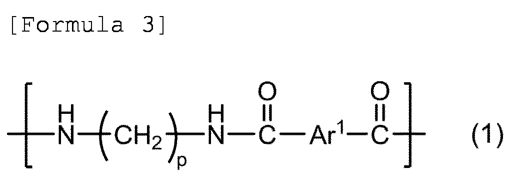
   wherein Ar¹ represents a phenylene group or a naphthylene group, and a plurality of Ar¹s of the semi-aromatic polyamide are the same as or different from one another; and p is an integer of 4 to 12.
[13] A resin composition comprising: a semi-aromatic polyamide having a structural unit represented by the following formula (1); a carbon fiber; and a water-soluble carbodiimide,
   wherein a content of the carbon fiber is 5 parts by mass or more and 160 parts by mass or less, preferably 20 parts by mass or more and 80 parts by mass or less, and more preferably 35 parts by mass or more and 50 parts by mass or less; and
   a content of the water-soluble carbodiimide is 0.1 parts by mass or more and 35 parts by mass or less, preferably 0.2 parts by mass or more and 15 parts by mass or less, and more preferably 0.3 parts by mass or more and 3 parts by mass or less,
   based on 100 parts by mass of a content of the semi-aromatic polyamide. 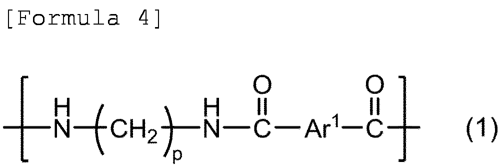
   wherein Ar¹ represents a phenylene group or a naphthylene group, and a plurality of Ar¹s of the semi-aromatic polyamide are the same as or different from one another; and p is an integer of 4 to 12.
[14] The resin composition according to [12] or [13], wherein a mass ratio of the carbon fiber to the water-soluble carbodiimide is 1/7 to 160/1, preferably 8/1 to 120/1, and more preferably 10/1 to 100/1.
[15] The resin composition according to any one of [12] to [13],
   wherein the semi-aromatic polyamide is a semi-aromatic polyamide having a structural unit represented by formula (1) wherein Ar¹ represents a 1,4-phenylene group and p is 9 or 10, and
   the water-soluble carbodiimide is
   a carbodiimide compound that is soluble in water at 25°C at a concentration of 10% by mass or more, and
   is a polycarbodiimide having a carbodiimide group (-N=C=N-) and a hydrophilic segment in a molecule,
   wherein the hydrophilic segment is a structure comprising at least one selected from the group consisting of an oxyalkylene group, an acetal structure, an imino group, a hydroxy group, an amino group, an epoxy group, and a carboxy group,
   the polycarbodiimide having a carbodiimide group (-N=C=N-) equivalent of 300 g/mol or more and 600 g/mol or less.

### (Molded body)

One embodiment of the molded body contains the resin composition of the embodiment described above.

As the molded body of the present embodiment, a molded body containing the resin composition of the embodiment described above can be given as an example.

The molding method from the resin composition to the molded body is not particularly limited, but melt molding is preferred, and examples thereof include extrusion molding, T-die molding, blow molding, and injection molding, and a molding method according to the shape and the like of the molded body can be selected.

The molded body of the present embodiment can be applied to all uses to which a resin composition can be generally applied. Examples of the molded body of the present embodiment include electrical and electronic components such as connectors, sockets, relay components, coil bobbins, optical pickups, oscillators, printed wiring boards, circuit boards, semiconductor packages, and computer-related components; semiconductor production process-related components such as IC trays and wafer carriers; home electric appliance components such as VTRs, televisions, irons, air conditioners, stereos, vacuum cleaners, refrigerators, rice cookers, and lighting apparatus; lighting apparatus components such as lamp reflectors and lamp holders; audio product components such as compact discs, laser disc (R), and speakers; communication device components such as ferrules for optical cables, telephone components, facsimile components, and modems; copier and printer-related components such as separation claws and heater holders; machine components such as impellers, fan gears, gears, bearings, and motor components and cases; automobile components such as automobile mechanism components, engine components, components in an engine room, electrical components, and interior components; cooking utensils such as microwave cooking pots and heat-resistant tableware; heat insulating and soundproofing materials such as floor materials and wall materials, support materials such as beams and columns, building materials such as roof materials, and materials for civil engineering and construction; components for aircraft, spacecraft, and space devices; radiation facility members such as nuclear reactors, marine facility members, cleaning jigs, optical device components, valves, pipes, nozzles, filters, membranes, medical device components and medical materials, components for sensors, sanitary fixtures, sporting goods, leisure equipment, and binding bands.

The molded body of the present embodiment contains the resin composition of the embodiment described above, and therefore the durability is improved. Therefore, the molded body of the present embodiment is suitable for sliding uses among others and is suitable as a mechanical component such as a gear among the sliding uses, and can be utilized suitably as a gear in particular.

Examples of the type of the gear include a spur gear, a helical gear, a rack, an internal gear, a worm gear, a worm wheel gear, a bevel gear, and a hypoid gear.

### Examples

Hereinafter, the present disclosure will be described more specifically with reference to Examples, but the present disclosure is not limited by the following Examples.

### <Production of resin composition>

As the semi-aromatic polyamide, the carbon fiber, and the carbodiimide, the following ones were respectively used.

### • Semi-aromatic polyamide

Semi-aromatic polyamide (P1): Semi-aromatic polyamide having structural unit represented by formula (1) wherein Ar¹ is 1,4-phenylene group and p is 10. Melt mass flow rate (MFR) 24 g/10 min.

Semi-aromatic polyamide (P2): Semi-aromatic polyamide having a structural unit represented by formula (1) wherein Ar¹ is 1,4-phenylene group and p is 9. MFR 20 g/10 min.

The MFRs of the semi-aromatic polyamides were measured in accordance with JIS K 7210 at a test temperature of 330°C with a load of 2160 g.

### • Carbon fiber

"Pyrofil (R) Chopped fiber TR03M," manufactured by Mitsubishi Chemical Corporation, fiber length 3 mm, number average fiber diameter 7 µm

### • Carbodiimide

Carbodiimide (1): Aqueous solution of water-soluble carbodiimide, "CARBODILITE SV-02," manufactured by Nisshinbo Chemical Inc., nonvolatile content 40% by mass, carbodiimide group equivalent 430 g/mol

Carbodiimide (2): Non-water-soluble carbodiimide, "STABAXOL (R) P-100," manufactured by Rhein Chemie Corporation

### [Method for measuring number average fiber length of carbon fiber in pellet-shaped resin composition]

A pellet in an amount of 5 g was heated at 450°C for 3 hours to remove the resin component and obtain an ashed residue containing the carbon fiber. A sample solution was obtained by mixing 1 g of the ashed residue with 150 mL of acetone. Next, about 5 mL of the sample solution was put on a glass slide and dried naturally. The glass slide with the ashed residue put thereon was set in a projector (microscope) and displayed enlarging the image to 100 magnifications, and the fiber lengths of at least 400 carbon fibers were measured to determine the number average value of the obtained fiber lengths of the carbon fibers.

### (Example 1)

Mixed were 1.25 parts by mass of carbodiimide (1) and 30 parts by mass of the carbon fiber, and the resulting mixture was then heated to 120°C to remove water and obtain 30.5 parts by mass of mixture (Ma) of the carbon fiber and the water-soluble carbodiimide.

In a twin-screw extruder (manufactured by Ikegai Corp., PCM-30), 30.5 parts by mass of mixture (Ma) obtained and 69.5 parts by mass of semi-aromatic polyamide (P1) were charged to perform melt kneading under conditions of a barrel temperature of 320 to 350°C, a number of screw revolutions of 150 rpm, and a discharge amount of 5 kg/minute under deaeration to discharge the resulting mixture in a strand shape through a circular nozzle (discharge port) and pelletize the discharged mixture with a strand cutter through a belt conveyor with a water-cooling system, and thus a pellet-shaped resin composition was obtained. The number average fiber length of the carbon fiber in the obtained pellet was 150 µm.

### (Comparative Example 1)

A pellet-shaped resin composition was obtained in the same manner as in Example 1 except that only 30 parts by mass of the carbon fiber was used instead of 30.5 parts by mass of the above mixture (Ma) and the amount of semi-aromatic polyamide (P1) blended was changed to 70 parts by mass. The number average fiber length of the carbon fiber in the obtained pellet was 154 µm.

### (Comparative Example 2)

Mixed were 0.5 parts by mass of carbodiimide (2) and 30 parts by mass of the carbon fiber, and the resulting mixture was then heated to 120°C to obtain 30.5 parts by mass of mixture (Mb) of the carbon fiber and the non-water-soluble carbodiimide.

Subsequently, a pellet-shaped resin composition was obtained in the same manner as in Example 1 except that 30.5 parts by mass of the above mixture (Ma) was changed to 30.5 parts by mass of the above mixture (Mb). The number average fiber length of the carbon fiber in the obtained pellet was 153 µm.

### (Example 2)

A pellet-shaped resin composition was obtained in the same manner as in Example 1 except that 69.5 parts by mass of semi-aromatic polyamide (P1) was changed to 69.5 parts by mass of semi-aromatic polyamide (P2). The number average fiber length of the carbon fiber in the obtained pellet was 150 µm.

### (Comparative Example 3)

A pellet-shaped resin composition was obtained in the same manner as in Example 2 except that only 30 parts by mass of the carbon fiber was used instead of 30.5 parts by mass of the above mixture (Ma) and the amount of semi-aromatic polyamide (P2) blended was changed to 70 parts by mass. The number average fiber length of the carbon fiber in the obtained pellet was 153 µm.

### <Examples of gear production>

The pellet-shaped resin composition was put into an injection molding machine to perform injection molding under injection conditions of a barrel temperature of 320 to 340°C, a metal mold temperature of 120°C, a back pressure of 6 MPa, a number of screw revolutions of 100 rpm, an injection pressure of 100 MPa, an injection speed of 30 mm/second, an injection time of 6 seconds, a dwelling pressure of 90 MPa, and a cooling time of 25 seconds, and thus a gear was produced.

The gear was produced as a gear having a shape of a spur gear, a module of 1, a number of teeth of 48, a pressure angle of 20°, a reference diameter of 48 mm, a tip diameter of 50 mm, a root diameter of 45.5 mm, a face width of 8 mm, a profile shift coefficient of 0, and a span measurement of 16.909 (a number of teeth in the span of 6). An example of produced gears is shown in Figure 1.

### <Evaluation>

The produced gears were subjected to the following durability test.

### [Durability test]

In a power-absorbing gear running tester shown in JIS B 1759, a metal master gear [material: SCM420 carburized, quenched, and tempered (surface-cured) product, quenched and cured layer depth 0.8 to 1.2, hardness HRC 55 to 60, gear shape: spur gear, module 1, number of teeth 67, pressure angle 20°, reference diameter 67 mm, tip diameter 69 mm, root diameter 64.5 mm, face width 15 mm, profile shift coefficient 0, and span measurement 23.079 (number of teeth in span 8)] as a drive gear and the produced gear were engaged and installed.

The tester was operated under the conditions of a load torque to the produced gear of 8 N·m, a revolution speed of 1000 rpm, a non-lubricating condition, a temperature of 23°C, a relative humidity of 50%RH, and a back lash of 0.1 mm in the normal line direction to measure the total number of revolutions until the gear was destructed. The results are shown in Table 1.

Note that the "destruction" of the gear was defined as a state in which the power was not able to be transferred from the metal master gear to the gear due to breakage of the teeth of the gear or other reasons.

**[Table 1]**

| Resin composition | | Example 1 | Comparat ive Example 1 | Comparat ive Example 2 | Example 2 | Comparat ive Example 3 |
|---|---|---|---|---|---|---|
| Compositi on /% by mass | Semi-aromatic polyamide (P1) | 69.5 | 70 | 69.5 | | |
| | Semi-aromatic polyamide (P2) | | | | 69.5 | 70 |
| | Carbon fiber | 30 | 30 | 30 | 30 | 30 |
| | Carbodiimide (1) | 0.5 | | | 0.5 | |
| | Carbodiimide (2) | | | 0.5 | | |
| Evaluation | Gear durability test Total number of revolutions until gear is destructed | 7.0 × 10⁵ | 8.2 × 10⁴ | 7.1 × 10⁴ | 4.6 × 10⁵ | 2.8 × 10⁵ |

According to the results of the durability test, the durability of the gear was improved in Example 1 containing the water-soluble carbodiimide as compared with Comparative Example 2 containing the non-water-soluble carbodiimide.

The durability test was conducted under a high load condition of a load torque of 8 N·m, and therefore it was shown that the pellet-shaped resin compositions of Examples 1 to 2 are useful molding materials that make it possible to produce a gear having excellent durability under a high load condition.

Each configuration in each embodiment, a combination thereof, and the like are examples, and additions, omissions, substitutions, and other modifications of configurations are possible unless they depart from the scope of the present disclosure. In addition, the present disclosure is not limited by each embodiment but is limited only by the claims.

## Claims

1. A resin composition comprising:
a semi-aromatic polyamide having a structural unit represented by the following formula (1);
a carbon fiber; and
a water-soluble carbodiimide: 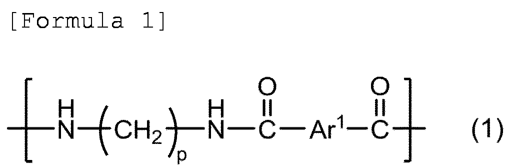
wherein Ar¹ represents a phenylene group or a naphthylene group, and a plurality of Ar¹s of the semi-aromatic polyamide are the same as or different from one another; and p is an integer of 4 to 12.

2. The resin composition according to claim 1, wherein the semi-aromatic polyamide is a semi-aromatic polyamide having a structural unit represented by formula (1), wherein Ar¹ represents a 1,4-phenylene group and p is 9 or 10.

3. The resin composition according to claim 1 or 2, wherein a content of the water-soluble carbodiimide is 0.1% by mass or more and 15% by mass or less based on a total mass of the resin composition.

4. The resin composition according to any one of claims 1 to 3, wherein a content of the carbon fiber is 5% by mass or more and 60% by mass or less based on a total mass of the resin composition.

5. The resin composition according to any one of claims 1 to 4,
wherein a content of the semi-aromatic polyamide is 40% by mass or more and 95% by mass or less based on a total mass of the resin composition.

6. The resin composition according to any one of claims 1 to 5,
wherein a content of the carbon fiber is 5 parts by mass or more and 160 parts by mass or less, preferably 20 parts by mass or more and 80 parts by mass or less, and more preferably 35 parts by mass or more and 50 parts by mass or less; and
a content of the water-soluble carbodiimide is 0.1 parts by mass or more and 35 parts by mass or less, preferably 0.2 parts by mass or more and 15 parts by mass or less, and more preferably 0.3 parts by mass or more and 3 parts by mass or less, based on 100 parts by mass of a content of the semi-aromatic polyamide.

7. The resin composition according to any one of claims 1 to 6,
wherein a mass ratio of the carbon fiber to the water-soluble carbodiimide is 1/7 to 160/1, preferably 8/1 to 120/1, and more preferably 10/1 to 100/1.

8. The resin composition according to any one of claims 1 to 7,
wherein the semi-aromatic polyamide is a semi-aromatic polyamide having a structural unit represented by formula (1) wherein Ar¹ represents a 1,4-phenylene group and p is 9 or 10,
the water-soluble carbodiimide is a carbodiimide compound that is soluble in water at 25°C at a concentration of 10% by mass or more, and is a polycarbodiimide having a carbodiimide group (-N=C=N-) and a hydrophilic segment in a molecule,
wherein the hydrophilic segment is a structure comprising at least one selected from the group consisting of an oxyalkylene group, an acetal structure, an imino group, a hydroxy group, an amino group, an epoxy group, and a carboxy group, and
the polycarbodiimide has a carbodiimide group (-N=C=N-) equivalent of 300 g/mol or more and 600 g/mol or less.

9. The resin composition according to any one of claims 1 to 4, being a resin composition for molding a gear.

10. A molded body comprising the resin composition according to any one of claims 1 to 5.

11. The molded body according to claim 6, being a gear.
